# FASCICULE DE BREVET EUROPEEN

(11) **EP 2 349 872 B1**
(45) Date de publication et mention de la délivrance du brevet: **06.05.2015**
(21) Numéro de dépôt: 09753213.9
(22) Date de dépôt: 10.11.2009
(51) Int. Cl.: B65D 85/804

(54) **CAPSULE POUR PERCOLATION DE PRODUIT AROMATIQUE TEL QUE DU CAFÉ**
KAPSEL ZUM FILTERN EINES AROMATISCHEN PRODUKTS, WIE ZUM BEISPIEL KAFFEE
CAPSULE FOR PERCOLATING AN AROMATIC PRODUCT SUCH AS COFFEE

(30) Priorité: 17.11.2008 FR 0857805
(43) Date de publication de la demande: 03.08.2011
(73) Titulaire: Moutty, Tirouvady, 95130 Franconville (FR)
(72) Inventeur: Moutty, Tirouvady, 95130 Franconville (FR)
(74) Mandataire: Delprat, Olivier
(86) Numéro de dépôt international: PCT/IB2009/054985
(87) Numéro de publication internationale: WO 2010/055465

(56) Documents cités:
- EP-A- 0 468 079
- WO-A-00/56629
- WO-A-2008/136026
- FR-A- 2 617 389
- GB-A- 2 343 438
- NL-C1- 1 001 514
- US-A- 5 472 719

## Description

L'invention concerne le domaine des contenants de produit aromatique, tel que du café, du thé, des tisanes pour infusion avec de l'eau chaude.

On distingue deux familles de contenant, les sachets en papier filtre et les capsules pour percolateur.

Les sachets à infusion laissent passer l'eau chaude. Le produit est infusé avec de l'eau chaude à pression atmosphérique. De tels sachets sont généralement en papier filtre et sont éventuellement emballés dans un autre contenant pour conserver l'arôme du produit à infuser.

Des machines à café, telles que celle décrite dans la demande de brevet FR 2 885 288, utilisent des sachets du type précédent. Le sachet est disposé dans une enceinte fermée adaptée au sachet et de l'eau sous pression est envoyée d'un côté et du liquide infusé est récupéré de l'autre côté. La machine utilisant des sachets en papier filtre ne perce pas le sachet. L'eau chaude traverse le papier filtre. La pression d'eau utilisée pour l'infusion est modérée et le café contenu dans le sachet est modérément compacté.

L'invention concerne plus particulièrement des capsules pour percolateur selon le préambule de la revendication 1. De telles capsules sont généralement rigides et étanches. Le café, ou le produit pour percolation qu'elles contiennent, est généralement fortement compacté.

Une telle capsule est décrit par le document NL 1001514 C1.

Le document EP 1 669 011 décrit une tête de machine à expresso. Dans la machine, un premier poinçon d'injection perce la capsule et envoie de l'eau chaude sous pression. Un autre poinçon de récupération perce également la capsule et récupère le liquide infusé ayant traversé à haute pression un café compacte. Cela permet notamment de faire du café de type expresso. De telles capsules sont à usage unique et sont jetées après usage. Cela pose un problème de traitement du déchet que représente la capsule après usage.

La demande de brevet WO 2006/003115 décrit une méthode d'infusion avec une capsule de café. La capsule décrite est en matériau thermoplastique. De telles capsules sont particulièrement néfastes à l'environnement car le déchet non retraitable occupe tout le volume de la capsule. Cela est d'autant plus dommage que le café à l'intérieur de la capsule est naturellement biodégradable. D'autres capsules existent, à base d'alliage d'aluminium.

L'invention propose une capsule pour percolation de produit aromatique tel que du café, moins pénalisante pour l'environnement, selon la revendication 1.

Selon un mode de réalisation, la capsule pour percolation de produit aromatique tel que du café, comprend un fond, une paroi latérale et un couvercle délimitant un volume intérieur de la capsule, et constituée en matériau étanche à l'infiltration d'air de manière à conserver le produit aromatique destiné à être enfermé dans le volume intérieur. La capsule est perforable par un percolateur. Le fond est déformable dans le percolateur. Le fond et la paroi latérale sont constitués de parties préalablement disjointes et scellées de manière étanche par une zone de surface commune à la paroi latérale et au fond.

Grâce au fait que le fond est scellé en surface avec la paroi latérale, la capsule assure sa fonction de contenant étanche avant son insertion dans le percolateur. Le fond étant déformable, et scellé par sa surface avec la surface de la paroi latérale, la déformation dans le percolateur fragilise la liaison entre le fond et la paroi latérale. Cela facilite l'éventrage de la capsule après usage. Cela permet de libérer le marc de café restant. Cela réduit le volume de matériau susceptible de nuire à l'environnement.

Avantageusement, la paroi latérale est de forme tronconique autour d'un axe de la capsule, le couvercle et le fond étant sensiblement perpendiculaires audit axe, le fond s'étendant du côté du plus petit diamètre de la forme tronconique.

Avantageusement, la zone de surface commune à la paroi latérale et au fond présente une forme de jupe faisant saillie à l'extérieur du volume intérieur de la capsule et s'étendant parallèlement autour de l'axe de la capsule.

Cette jupe permet à des poinçons de récupération du percolateur de se loger sous le fond de la capsule. La perforation de la capsule par les poinçons ne risque pas d'avoir lieu avant la fermeture de la cavité du percolateur. Cela évite de solliciter mécaniquement le fond avant que la percolation ait vraiment commencé. Cela permet de retenir l'eau chaude sous pression dans le café compacté avant que les poinçons de récupération ne pénètrent dans le volume intérieur de la capsule.

Avantageusement, la hauteur axiale de la jupe est comprise entre 10% et 15%, de préférence comprise entre 12% et 14%, par exemple 13% du diamètre du fond de la capsule. Le scellement de surface entre le fond et la paroi latérale se fait ainsi sur une surface telle qu'elle confère une bonne cohésion mécanique à la capsule avant usage.

Avantageusement, la hauteur axiale de la jupe est comprise entre 10% et 20%, de préférence entre 14% et 18%, par exemple 16% de la hauteur axiale de la capsule. Cela permet d'augmenter la compacité du produit contenu dans la capsule sans modifier ni la quantité de produit contenu, ni le volume extérieur de la capsule par rapport aux capsules couramment utilisées dans les machines à café. Cela permet aux capsules de l'invention d'utiliser les percolateurs existants convenant pour le volume extérieur de la capsule.

Avantageusement, la paroi latérale présente un rebord supérieur de raccordement, le couvercle étant préalablement disjoint de la paroi latérale et scellé avec le rebord supérieur de raccordement par une zone de surface commune.

La parroi latérale, le fond et le couvercle sont composés d'une couche principale en un matériau principal recouvert d'un côté d'une pellicule de plastique thermossoudable.

Ce mode de réalisation est particulièrement avantageux pour l'environnement. Le matériau principal peut être dégradé lors du retraitement de la capsule usagée. En particulier, la percolation contribue à mouiller le matériau principal. Cela facilite le commencement de la dégradation du matériau principal et favorise l'éventrement de la capsule, la libération du produit usagé et le retraitement de l'ensemble.

ladite pellicule est compatible avec un contact alimentaire. On entend par compatible avec un contact alimentaire, un matériau conforme à la directive européenne 2002/72/CE, ou à la spécification américaine US FDA 176.170. C'est-à-dire que le matériau de la paroi latérale, et/ou du fond et/ou du couvercle dans son ensemble ne donne pas lieu à des migrations significatives dans un simulant d'aliment. En particulier, et selon l'application de la capsule, il est souhaitable que le matériau convienne pour des aliments chaud, humides, secs, ou gras. Une conformité à un usage en boulangerie n'est pas requise pour une utilisation de la capsule dans les machines à café. Selon les normes considérées, la compatibilité au contact alimentaire peut aussi comprendre une quantité de métaux lourds inférieure à un seuil normalisé. La compatibilité au contact alimentaire peut aussi comprendre une résistance à la flexion mécanique. Ainsi la compatibilité au contact alimentaire n'est pas dégradée par le procédé de préformage, d'assemblage et de remplissage de la capsule.

Ladite pellicule est disposée dans la capsule du côté du volume intérieur. Le matériau principal est biodégradable en carton. On entend par biodégradable la conformité aux règles EPA (Environment Protection Agency -USA). En particulier, cela peut comprendre des traces de chlore et de dioxine inférieures à un seuil normalisé. La biodégradabilité confère en particulier au matériau de se dégrader mécaniquement de sorte que la capsule s'éventre naturellement après usage. La biodégradabilité est un moyen de faiblesse mécanique déclenchable. Ainsi, après usage, non seulement le matériau de la capsule lui-même se dissout dans la nature, mais se faisant il permet au contenu de la capsule de se dissoudre aussi dans la nature.

Le couvercle et la paroi latérale sont constitués du même matériau. Cela permet d'obtenir un retraitement quasi complet de la capsule.

Avantageusement, la pellicule de plastique thermossoudable est un film de polypropylène d'épaisseur inférieure à 1/10^{ème}, et de préférence inférieure à 1/30^{ème} de l'épaisseur globale du matériau principal.

Avantageusement, l'épaisseur du matériau principal est inférieure à 0,5 mm et en particulier inférieure à 0,3 mm.

Selon un mode de réalisation, la capsule comprend du produit aromatique pour percolation, compacté dans la totalité du volume intérieur, de préférence avec une densité supérieure à 0,3 g/cm³. Le produit contenu peut être par exemple sous forme de mouture ou de poudre.

Selon un mode de réalisation, la capsule comprend du produit aromatique pris parmi du café, du thé, du thé citron naturel, du thé vert, du thé à la menthe ou une ou plusieurs sortes de tisane. De telles capsules peuvent aussi contenir des produits solubles dans l'eau, tels que de la poudre de cacao ou du lait ou de la poudre de lait.

D'autres caractéristiques et avantages de l'invention apparaîtront à la lecture de la description détaillée de quelques modes de réalisation pris à titre d'exemples non limitatifs et illustrés par les dessins annexés, sur lesquels :
- la figure 1 est une illustration de la capsule prête à être remplie ;
- la figure 2 est une coupe du matériau de la capsule ;
- la figure 3 est un développé de la paroi latérale avant pré-assemblage ;
- la figure 4 est une vue extérieure de la paroi latérale préformée avant assemblage de la capsule ;
- la figure 5 est une vue de dessus du fond de la capsule avant préformage ;
- la figure 6 est une coupe du fond de la capsule après préformage ;
- la figure 7 est une vue de dessus du couvercle ;
- la figure 8 est une coupe de la capsule et du percolateur, en phase de fermeture du percolateur ; et
- la figure 9 est une coupe de la capsule et du percolateur en cours de percolation.

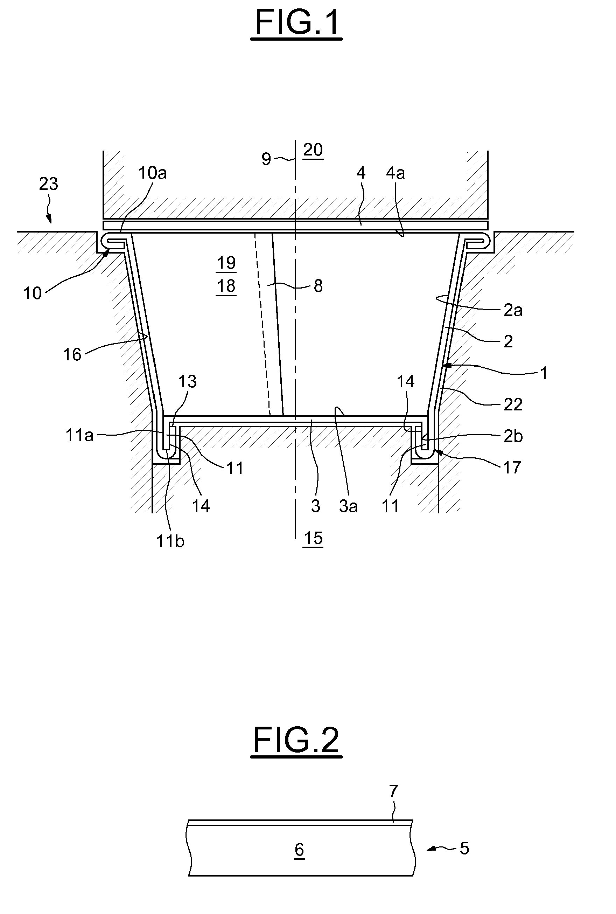

On va à l'aide des figures 1 à 7 décrire un mode de fabrication de la capsule 1. Celle-ci est constituée de trois éléments initialement disjoints avant d'être préformés puis assemblés. La capsule 1 comprend trois éléments que sont une paroi latérale 2, un fond 3 et un couvercle 4. Chacun des trois éléments 2, 3, 4 de la capsule est constitué d'une feuille découpée 5 illustrée en figure 2. La feuille découpée 5 est constituée d'un matériau principal 6 recouvert d'une pellicule 7 en plastique thermossoudable. Le mode de pelliculage de la feuille 5 est tel que la pellicule 7 est intimement liée au matériau principal 6 sur toute la surface de la surface de la découpe de la feuille 5. La feuille 5 est pelliculée d'un seul côté de la feuille.

Ainsi, chacun des trois éléments 2, 3, 4 présente un côté pelliculé respectivement 2a, 3a, 4a et un côté où le matériau principal 6 est à l'état brut. Le coté pelliculé est compatible avec un contact alimentaire. La feuille 5 peut être en carton alimentaire biodégradable, tel que le matériau « Indobarr 1PE® » de la société ITC.

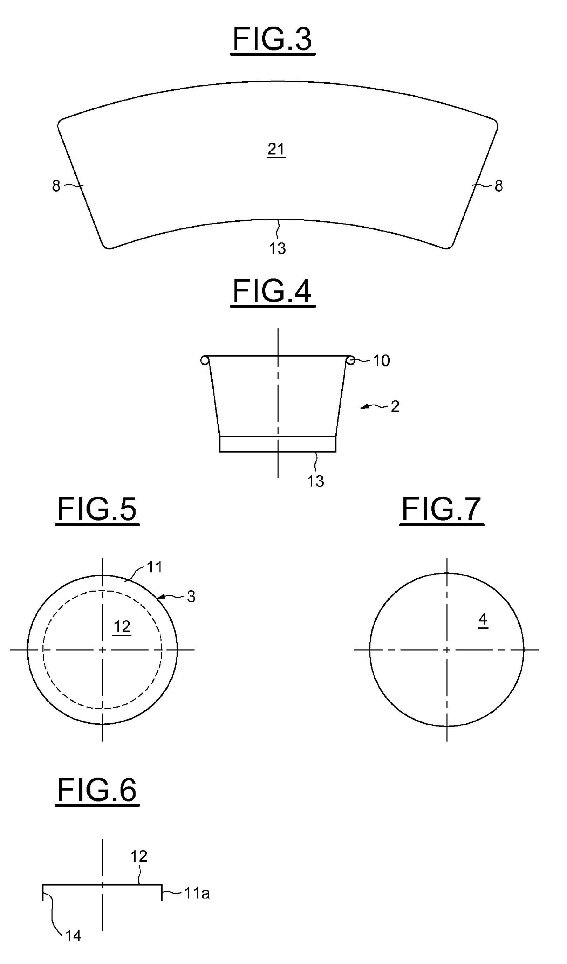

La paroi latérale 2 présente à l'état déployé la forme d'une bande 21 en arc de cercle illustrée en figure 3, de telle manière que, en étant repliée sur elle-même et soudée par ses extrémités 8, la paroi latérale 2 présente la forme d'un tronc de cône avec un côté de plus petit diamètre destiné à recevoir le fond 3, et un côté de plus grand diamètre destiné à recevoir le couvercle 4. L'adhérence des deux extrémités 8 entre elles de la paroi latérale 2 est obtenue par thermossoudage de la pellicule 7 d'une extrémité 8 sur la partie en matériau principal 6 de l'autre extrémité de la bande en arc de cercle 2. La forme en tronc de cône de la paroi latérale 2 est sensiblement symétrique de révolution autour d'un axe 9 de la capsule 1. Le repliement de la bande en arc de cercle 2a par ses extrémités 8 est tel que le côté pelliculé 2a soit du côté intérieur de la paroi latérale 2, c'est-à-dire du côté de l'axe 9 de la capsule.

Un rebord supérieur 10 en forme de tore est formé en partie haute de la capsule 1, c'est-à-dire du côté du plus grand diamètre de la forme en tronc de cône. Ce rebord torique 10 est formé par exemple par un poinçon de forme torique correspondante ou par une mollette.

Le fond 3 présente une forme initiale discale dans laquelle on recourbe, du côté opposé à la pellicule 7 de la face 3a, des rebords 11 ainsi qu'illustré aux figures 5 et 6. Le fond 3 ainsi préformé est introduit à l'intérieur de la forme en tronc de cône de la paroi latérale 2 de manière qu'une partie centrale 12 du fond 3 soit sensiblement perpendiculaire à l'axe 9 de la capsule 1, et que une extrémité axiale 11b du rebord 11 du fond 3 soit sensiblement parallèle et à distance du bord inférieur 13 de la paroi latérale 2. Le bord inférieur 13 de la bande 21 en forme de tronc de cône est replié en direction de l'axe 9 de la capsule 1 puis plaqué sur une face intérieure 14 du rebord 11.

La face pelliculée 2a de la paroi latérale 2 présente une zone de surface 2b en regard du rebord 11 du fond 3. Une mollette non représentée permet de presser le rebord 11 du fond 3 en sandwich entre le bord inférieur 13 de la bande 21 en forme de tronc de cône et la zone de surface 2b de cette même paroi latérale 2. Ainsi, la zone de surface 2b de la face pelliculée 2a de la paroi latérale 2 et le côté pelliculé 11a du rebord 11 du fond sont soudé l'un à l'autre et forment une surface commune à la paroi latérale 2 et au fond 3. Ce thermossoudage permet d'assurer l'étanchéité entre le fond 3 et la paroi latérale 2. La face pelliculée 3a du fond 3 et la face pelliculée 2a de la paroi latérale 2 sont ainsi en continuité et définissent avec le couvercle 4 un volume intérieur 19 de la capsule 1. Le rebord 11 du fond, la partie 2b de la paroi latérale 2 et le rebord inférieur 13 forme une jupe 17 s'étendant axialement à l'extérieur de la capsule 1.

On va décrire maintenant le mode de remplissage et de fermeture de la capsule 1. La paroi latérale 2 soudée avec le fond 3 ainsi que précédemment décrits sont introduits dans une cavité 22 d'un outil de remplissage 23 de la capsule 1. Cette outil de remplissage 23 comprend un piston intérieur 15 et un alésage tronconique 16 de forme correspondant à la paroi latérale 2 pour former la cavité 22. Le piston intérieur 15 présente un décrochement périphérique permettant de recevoir la jupe 17. Le piston intérieur 15 épouse ainsi la forme du fond 3 de sorte qu'il est possible de compacter à l'intérieur de la capsule 2 du produit 18 se présentant sous la forme de mouture ou de poudre. Cela permet de réduire la sollicitation mécanique des soudures du fond 3 et des extrémités d'assemblage 8 de la paroi latérale 2.

La pellicule 7 est en matériau compatible avec un contact avec des aliments. Le produit 18 peut être du café, du thé, enrobé ou non de citron naturel ou d'arôme artificiel, du thé vert, du thé à la menthe, de la poudre de cacao ou de lait en poudre. Le remplissage du volume intérieur 19 de la capsule 1 peut se faire par compactages successifs de plusieurs couches de produit 18, ou bien par précompactage dans un piston non représenté qui déverse dans le volume intérieur 19 du produit 18 déjà comprimé. Cependant, bien que l'utilisation principale de la capsule soit de contenir des produits compactés, la capsule 1 n'est pas limitée à contenir de tels produits. Elle peut aussi contenir, des produits liquides tels que du lait ou de la crème. Une telle capsule pourrait être utilisée pour contenir de la lessive, et plus généralement toute sorte de produits devant être conditionné de manière étanche par dose.

Quelque soit le mode de compactage du produit 18 envisagé, celui-ci affleure à l'état comprimé du rebord supérieur 10. Le couvercle 4 est disposé de manière à ce que son côté pelliculé 4a soit en contact avec le produit 18 et avec le rebord torique 10. Un piston extérieur 20 comprime l'ensemble et permet le thermosoudage d'une zone extérieure pelliculée 4a du couvercle 4 sur une zone 10a pelliculé également du rebord torique 10 de la paroi latérale 2. Ce thermossoudage assure la fermeture mécanique et l'étanchéité de la capsule 1 alors que le produit 18 occupe la totalité du volume intérieur 19 de la capsule 1.

Selon un mode de réalisation, la capsule 1 présente une hauteur axiale de 25 mm et un diamètre de fond de 30 mm, et un diamètre de couvercle de 40 mm après assemblage. Autrement dit, la bande en arc de cercle 2a fait environ 36 mm de largeur, permettant la formation à la fois du bord intérieur 13 et du rebord torique 10. Le produit aromatique 18 peut être compacté dans la totalité du volume intérieur 19 avec une densité supérieure à 0,3 g/cm³. Cela permet de mettre 6.5 g de café dans une capsule aux dimensions précitées. La pellicule 7 de plastique thermossoudable peut être un film de polypropylène d'épaisseur inférieure à 1/10^{ème}, et de préférence inférieure à 1/30^{ème} de l'épaisseur globale du matériau principale 6. L'épaisseur du matériau principal 6 peut être inférieure à 0,5 mm et en particulier inférieure à 0,3 mm.

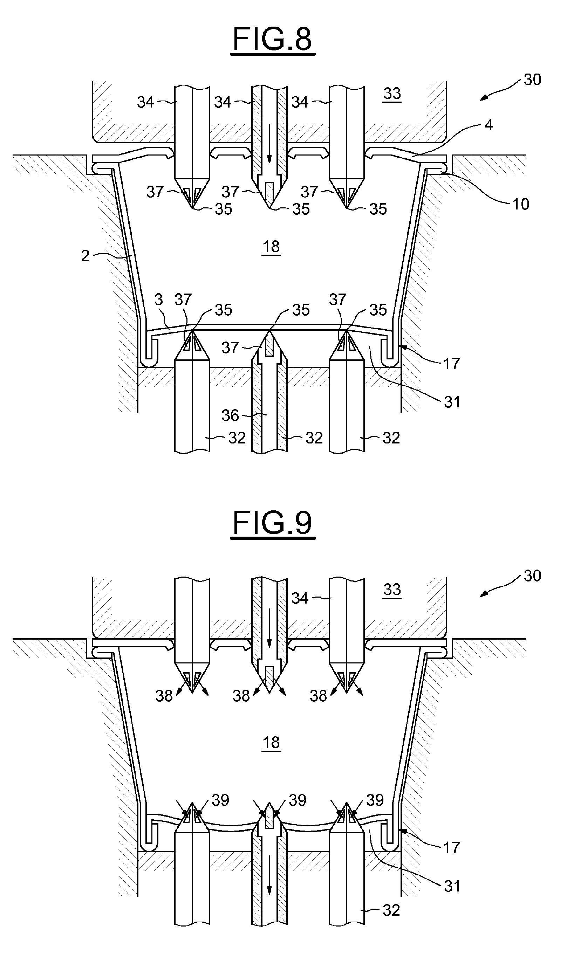

On va maintenant à l'aide des figures 8 et 9 décrire une utilisation de la capsule 1 dans un percolateur 30. Celui-ci présente une cavité 31 correspondant à la forme de la capsule 1 au fond de laquelle sont disposés une série de poinçons de récupération 32. Une partie supérieure 33 du percolateur 30 est pourvue d'une série de poinçons d'injection 34.

Chacun des poinçons de récupération 32 et d'injection 34 présente une forme pointue d'extrémité 35 et une buse intérieure 36 débouchant dans la portion pointue d'extrémité 35 par des orifices 37.

Dans une première étape de percolation, on introduit la capsule 1 dans la cavité 31. Lorsque celle-ci n'est pas pressée par la partie supérieure 33 du percolateur, le fond 3 de la capsule 1 repose sur les parties pointues 35 des poinçons de récupération 32. Dans une phase préliminaire de fermeture de la partie supérieure 33 illustrée en figure 8, les poinçons d'injection 34 perforent le couvercle 4 de la capsule 1 et pénètrent dans le volume intérieur 19 rempli de produit 18. Cet effort de perforation déforme légèrement la capsule 1 et la partie supérieure 33 vient presser le couvercle 4 de la capsule 1 de manière à assurer l'étanchéité de la cavité 31.

Selon les caractéristiques du café souhaité, on peut régler le moment de la phase de fermeture du percolateur 30 au cours de laquelle les poinçons de récupération 32 de la cavité 31 perforent à leur tour le fond 3 de la capsule 1.

De l'eau chaude sous pression 38 à une température d'environ 90° sous 20 bars est introduite par les poinçons d'injection 34 dans le produit compacté 18. Le phénomène de percolation commence et la déformation du fond 3 augmente. A ce moment-là, les poinçons de récupération 32 ont complètement perforé le fond 3 de sorte que l'eau 39 issue de la percolation est récupérée par les orifices 37 des poinçons de récupération 32.

Après la percolation, la capsule 1 perforée tant par son couvercle que par son fond 3 est jetée. Dans une variante, la capsule convient également pour des percolateurs dont les poinçon d'injection et/ou de récupération sont situés ailleurs autour de la capsule.

On comprend que le carton biodégradable de la paroi latérale 2 du fond 3 et du couvercle 4 commence à se dégrader dès que le marc de produit 18, après percolation, commence à imbiber le carton. De plus, la déformation issue des perforations des poinçons de récupération 32 peut contribuer à fragiliser le scellement du fond 3 sur la paroi latérale 2, de sorte que la dégradation de la capsule après usage est accélérée.

D'une manière générale, l'invention porte sur capsule 1 convenant, mais non limité à la percolation d'un produit aromatique 18 tel que du café. La capsule comprend un fond 3, une paroi latérale 2 et un couvercle 4 délimitant un volume intérieur 19 de la capsule 1. La capsule 1 est constituée en matériau étanche 5 à l'infiltration d'air de manière à conserver le produit 18 destiné à être enfermé dans le volume intérieur 19. La capsule comprend un moyen de faiblesse mécanique déclenchable par l'utilisation de la capsule.

Cela est particulièrement utile quand le produit 18 contenu dans la capsule n'est pas totalement évacué de la capsule lors de l'utilisation. Grâce au moyen de faiblesse mécanique déclenchable par l'utilisation de la capsule, celle-ci peut s'éventrer et libérer le reste de produit non évacué lors de l'utilisation. Ladite capsule est ainsi moins pénalisante pour l'environnement.

Le moyen de faiblesse mécanique déclenchable peut être constitué par un fond associé à la paroi latérale par un scellement en surface susceptible de craquer après la déformation due à l'utilisation dans un percolateur.

Ce moyen de faiblesse déclenchable peut alternativement ou en combinaison, être constitué par un matériau d'un des éléments de la capsule composé d'un film étanche et d'un matériau principal, le film étant relativement très mince par rapport au matériau principal, et le matériau principal étant biodégradable et relativement plus résistant mécaniquement que le film. Après usage, non seulement le matériau de la capsule lui-même se dissout dans la nature, mais se faisant il permet au contenu de la capsule de se dissoudre aussi dans la nature.

## Revendications

1. Capsule (1) pour percolation de produit aromatique (18) tel que du café, comprenant un fond (3), une paroi latérale (2) et un couvercle (4) délimitant un volume intérieur (19) de la capsule (1), et constituée en matériau étanche (5) à l'infiltration d'air de manière à conserver le produit aromatique (18) destiné à être enfermé dans le volume intérieur (19), la capsule (1) étant perforable par un percolateur (30), le fond (3) et la paroi latérale (2) étant constitués de parties préalablement disjointes et scellées de manière étanche par une zone de surface commune (2b, 11a) à la paroi latérale et au fond (3), et le fond étant déformable dans le percolateur (30), et la zone de surface (2b, 11a) commune à la paroi latérale et au fond présente une forme de jupe (17) faisant saillie à l'extérieur du volume intérieur (19) de la capsule (1) et s'étendant parallèlement autour de l'axe (9) de la capsule, caractétrisé en ce que
la paroi latérale (2), le fond (3) et le couvercle (4) étant composés d'une couche principale biodégradable en carton recouvert d'un côté d'une pellicule (7) de plastique thermossoudable, ladite pellicule (7) étant compatible avec un contact alimentaire et disposée dans la capsule (1) du côté du volume intérieur (19).

2. Capsule selon la revendication 1, dans laquelle la paroi latérale (2) est de forme tronconique autour d'un axe (9) de la capsule, le couvercle (4) et le fond (3) étant sensiblement perpendiculaires audit axe (9), le fond (3) s'étendant du côté du plus petit diamètre de la forme tronconique.

3. Capsule selon la revendication 2, dans laquelle la paroi latérale (2) présente un rebord supérieur (10) de raccordement, le couvercle (4) étant préalablement disjoint de la paroi latérale (2) et scellé avec le rebord supérieur (10) de raccordement par une zone de surface commune (10a).

4. Capsule selon l'une quelconque des revendications 1 à 3 dans lequel le fond (3), le couvercle (4) et la paroi latérale (2) sont constitués du même matériau (5).

5. Capsule selon l'une quelconques des revendications 1 à 4 dans laquelle la pellicule (7) de plastique thermossoudable est un film de polypropylène d'épaisseur inférieure à 1/10^{éme}, et de préférence inférieure à 1/30^{ème} de l'épaisseur globale du matériau principale (6) et/ou dans laquelle l'épaisseur du matériau principal (6) est inférieure à 0,5 mm et en particulier inférieure à 0,3 mm.

6. Capsule selon l'une des revendications précédentes, comprenant du produit aromatique (18) pour percolation, compacté dans la totalité du volume intérieur (19), de préférence avec une densité supérieure à 0,3 g/cm³.

7. Capsule selon l'une des revendications précédentes, comprenant du produit aromatique (18) pris parmi du café, du thé, du thé citron naturel, du thé vert, du thé à la menthe ou une ou plusieurs sortes de tisane.

## Patentansprüche

1. Kapsel (1) zum Filtern eines aromatischen Produkts (18), wie Kaffee, umfassend einen Boden (3), eine Seitenwand (2) und einen Deckel (4), der ein Innenvolumen (19) der Kapsel (1) begrenzt, bestehend aus einem Material (5), das gegen die Infiltration von Luft dicht ist, um das aromatische Produkt (18), das dazu bestimmt ist, in dem Innenvolumen (19) eingeschlossen zu sein, zu bewahren, wobei die Kapsel (1) durch einen Perkolator (30) durchstoßen werden kann, wobei der Boden (3) und die Seitenwand (2) von Teilen gebildet sind, die vorher getrennt und dicht durch eine gemeinsame Oberflächenzone (2b, 11a) der Seitenwand und des Bodens (3) miteinander verbunden werden, und wobei der Boden in dem Perkolator (30) verformbar ist, und wobei die gemeinsame Oberflächenzone (2b, 11a) der Seitenwand und des Bodens eine Schürzenform (17) aufweist, die außerhalb des Innenvolumens (19) der Kapsel (1) hinausragt und sich parallel um die Achse (9) der Kapsel erstreckt,
**dadurch gekennzeichnet, dass** die Seitenwand (2), der Boden (3) und der Deckel (4) aus einer biologisch abbaubaren Schicht aus Karton, der mit einer thermoschweißbaren Kunststofffolie (7) überzogen ist, bestehen, wobei die Folie (7) mit einem Nahrungsmittelkontakt vereinbar und in der Kapsel (1) auf der Seite des Innenvolumens (19) angeordnet ist.

2. Kapsel nach Anspruch 1, bei der die Seitenwand (2) von kegelstumpfartiger Form um eine Achse (9) der Kapsel ist, wobei der Deckel (4) und der Boden (3) im Wesentlichen senkrecht auf die Achse (9) sind, wobei sich der Boden (3) auf der Seite mit dem kleineren Durchmesser der kegelstumpfartigen Form erstreckt.

3. Kapsel nach Anspruch 2, bei der die Seitenwand (2) einen oberen Anschlussrand (10) aufweist, wobei der Deckel (4) vorher von der Seitenwand (2) getrennt ist und mit dem oberen Anschlussrand (10) durch eine gemeinsame Oberflächenzone (10a) verbunden wird.

4. Kapsel nach einem der Ansprüche 1 bis 3, bei der der Boden (3), der Deckel (4) und die Seitenwand (2) aus demselben Material (5) gebildet sind.

5. Kapsel nach einem der Ansprüche 1 bis 4, bei der die thermoschweißbare Kunststofffolie (7) eine Polypropylenfolie mit einer Dicke unter 1/10^{tel} und vorzugsweise unter 1/30^{stel} der Gesamtdicke des Hauptmaterials (6) ist, und/oder bei der die Dicke des Hauptmaterials (6) geringer als 0,5 mm und insbesondere geringer als 0,3 mm ist.

6. Kapsel nach einem der vorhergehenden Ansprüche, umfassend ein aromatisches Produkt (18) zum Filtern, das in der Gesamtheit des Innenvolumens (19) vorzugsweise mit einer Dichte über 0,3 g/cm³ verdichtet ist.

7. Kapsel nach einem der vorhergehenden Ansprüche, umfassend ein aromatisches Produkt (18), ausgewählt unter Kaffee, Tee, natürlichem Zitronentee, grünem Tee, Pfefferminztee oder einer oder mehreren Sorten Kräutertee.

## Claims

1. Capsule (1) for percolation of aromatic product (18) such as coffee, comprising a bottom (3), a side wall (2) and a cover (4) delimiting an internal volume (19) of the capsule (1), and made of a material (5) that is sealed against the infiltration of air so as to conserve the aromatic product (18) designed to be enclosed in the internal volume (19), the capsule (1) being able to be perforated by a percolator (30), the bottom (3) and the side wall (2) being made of portions previously separate and fixed in a sealed manner by a surface zone (2b, 11a) common to the side wall and to the bottom (3), and the bottom being able to be deformed in the percolator (30), and the surface zone (2b, 11a) common to the side wall and to the bottom having a skirt shape (17) protruding on the outside of the internal volume (19) of the capsule (1) and extending parallel about the axis (9) of the capsule, **characterized in that** the side wall (2), the bottom (3) and the cover (4) consist of a biodegradable, cardboard main layer covered on one side with a heat-sealable plastic film (7), the said film (7) being compatible with food contact and placed in the capsule (1) on the side of the internal volume (19).

2. Capsule according to Claim 1, in which the side wall (2) is of frustoconical shape about an axis (9) of the capsule, the cover (4) and the bottom (3) being substantially perpendicular to the said axis (9), the bottom (3) extending on the side with the smallest diameter of the frustoconical shape.

3. Capsule according to Claim 2, in which the side wall (2) has a top connecting rim (10), the cover (4) being previously separate from the side wall (2) and fixed to the top connecting rim (10) by a common surface zone (10a).

4. Capsule according to any one of Claims 1 or 3 in which the bottom (3), the cover (4) and the side wall (2) are made of the same material (5).

5. Capsule according to any one of Claims 1 to 4 in which the heat-sealable plastic film (7) is a film of polypropylene with a thickness of less than 1/10th, and preferably less than 1/30th, of the total thickness of the main material (6) and/or in which the thickness of the main material (6) is less than 0.5 mm and in particular less than 0.3 mm.

6. Capsule according to one of the preceding claims, comprising the aromatic product (18) for percolation, compacted in the totality of the internal volume (19), preferably with a density greater than 0.3 g/cm³.

7. Capsule according to one of the preceding claims, comprising the aromatic product (18) taken from coffee, tea, natural lemon tea, green tea, mint tea or one or more kinds of herbal tea.
